Europäisches Patentamt

European Patent Office

Office européen des brevets

(11) Veröffentlichungsnummer : **0 096 821**
**B1**

(12) # EUROPÄISCHE PATENTSCHRIFT

(45) Veröffentlichungstag der Patentschrift :
18.09.85

(51) Int. Cl.⁴ : **C 09 D   5/28, B 44 F   9/02**

(21) Anmeldenummer : **83105565.2**

(22) Anmeldetag : **07.06.83**

(54) **Masse zum Beschichten von Gegenständen.**

(30) Priorität : **15.06.82 DE 3222416**

(43) Veröffentlichungstag der Anmeldung :
**28.12.83 Patentblatt 83/52**

(45) Bekanntmachung des Hinweises auf die Patenterteilung : **18.09.85 Patentblatt 85/38**

(84) Benannte Vertragsstaaten :
**AT BE CH DE FR GB IT LI NL SE**

(56) Entgegenhaltungen : ·
**DD-A-   121 330
DE-B-  2 363 588
US-A-  3 928 675**

(73) Patentinhaber : **Erlacher, Franz-Xaver
Hauzenbergerstrasse 20
D-8000 München 21 (DE)**

(72) Erfinder : **Waldenmeier, Josef
Bleichgraben 16
D-8860 Nördlingen (DE)**

(74) Vertreter : **Charrier, Rolf, Dipl.-Ing.
Postfach 260 Rehlingenstrasse 8
D-8900 Augsburg 31 (DE)**

## Beschreibung

Die Erfindung betrifft eine Masse zum Beschichten von Gegenständen, um diesen eine baumrindenähnliche Oberfläche zu geben, wobei die Masse Sägemehl und ein Bindemittel enthält.

Um Gegenständen aus Glas, beispielsweise Flaschen eine baumrindenähnliche Oberfläche zu verleihen, ist es bekannt, beim Herstellen des Glasgegenstandes dessen Oberfläche baumrindenähnlich zu strukturieren. Diese Oberfläche wird anschließend mit einem braunen Oberflächenbelag versehen. Das Aussehen ist hierbei nicht befriedigend, insbesondere wirkt die Oberfläche glatt. Daneben ist es bekannt, Gegenstände mit einer braunen Kunststoffmasse zu beschichten, wobei beim Auftrag der Masse dieser eine baumrindenähnliche Struktur gegeben wird. Risse in der baumrindenähnlichen Oberfläche müssen hierbei durch ein Werkzeug oder von Hand eingearbeitet werden. Auch hier erhält man eine relativ glatte Oberflächenstruktur, bei welcher erkennbar ist, daß die aufgebrachte Masse aus Kunststoff besteht. Um diesen Eindruck zu mildern, ist es bekannt, der Kunststoffmasse Sägemehl beizugeben. Hierdurch wird wohl die Oberflächenstruktur verbessert, jedoch müssen Risse wie vorbeschrieben eingearbeitet werden. Derartige Massen sind auch als Holzfüller bekannt, bei welchem Schrumpfrisse beim Trocknen der Masse vermieden werden sollen.

Es besteht die Aufgabe, die Masse der eingangs genannten Art so auszubilden, daß beim Trocknen der Masse nach ihrem Auftrag Schrumpfrisse entstehen, welche den Rissen in einer Baumrinde täuschend ähnlich sein sollen.

Gelöst wird diese Aufgabe mit den Merkmalen des Anspruches 1. Vorteilhafte Ausgestaltungen sind den Unteransprüchen entnehmbar.

Bei der Masse entstehen während des Trocknens Schrumpfrisse. Die Orientierung dieser Schrumpfrisse kann begünstigt werden, indem beim Auftrag oder nach dem Auftrag der Masse die Oberfläche leicht geritzt wird. Beim Trocknen der Masse bilden sich dann die Ritzungen zu Schrumpfrissen aus. Die Trocknung wird bevorzugt bei einer Temperatur von 20° bis 50 °C durchgeführt. Die Masse weist eine ausgezeichnete Haftung mit ihrem Untergrund auf. Sie ist bereits beim Auftrag formstabil. In ihr können ohne weiteres Aststücke eingebettet werden, um abgesägte Astansätze vorzutäuschen. Die Masse ist aus handelsüblichen Bestandteilen zusammengesetzt und preisgünstig. Sie kann vor oder nach der Trocknung bemalt werden. Ist der Masse ein dunkler Farbstoff beigegeben und erfolgt die Bemalung vor der Trocknung, dann treten die Risse besonders deutlich in Erscheinung.

Eine bevorzugte Masse weist folgende Zusammensetzung auf :

60 Gew.% Sägemehl, grob und fein gemischt
5 Gew.% dunkelbraune Möbelbeize auf Wassergrundlage

20 Gew.% Polyvinylacetatleim als Kaltleim
12 Gew.% kaltwasserlöslicher Celluloseklebstoff als Füllstoff
3 Gew.% Nitrocelluloselack.

Die Masse wird in einer Dicke von etwa 2 bis 3 mm aufgetragen. Sie haftet ausgezeichnet auch auf glatten Oberflächen, beispielsweise auf glatten Glasgegenständen. Die sich ergebenden Risse sind etwa 1 bis 1,5 mm tief, so daß der Untergrund, auf dem die Masse aufgetragen ist, nicht sichtbar wird. In Bereichen stärkeren Auftrags der Masse ist die Rissbildung stärker.

Das vorerwähnte Anritzen vor oder zu Beginn der Trocknung ist nicht unbedingt erforderlich, wenn es sich um Gegenstände handelt, bei der die Orientierung der Schrumpfrisse durch die Form des Gegenstands, auf den die Masse aufgetragen ist, vorgegeben ist. Bei länglichen Flaschen beispielsweise bilden sich die Risse bevorzugt in Längsrichtung der Flasche aus.

## Patentansprüche

1. Masse zum Beschichten von Gegenständen, um diesen eine baumrindenähnliche Oberfläche zu geben, wobei die Masse Sägemehl und ein Bindemittel enthält, dadurch gekennzeichnet, daß der Sägemehlanteil 60 bis 85 Gew.% beträgt, als Bindemittel ein Kaltleim auf Polyvinylacetatgrundlage mit einem Anteil von etwa 10 bis 30 Gew.% verwendet wird und der Masse zusätzlich als Füllstoff ein kaltwasserlöslicher Celluloseklebstoff mit einem Anteil von etwa 5 bis 20 Gew.% beigegeben ist.

2. Masse nach Anspruch 1, dadurch gekennzeichnet, daß ihr weiterhin ein Farbstoff mit einem Anteil von etwa 3 bis 8 Gew.% beigegeben ist.

3. Masse nach Anspruch 2, dadurch gekennzeichnet, daß der Farbstoff wasserlösliche Möbelbeize ist.

4. Masse nach einem der Ansprüche 1 bis 3, dadurch gekennzeichnet, daß sie weiterhin einen Nitrocelluloselack bis maximal 3 Gew.% enthält.

5. Masse nach einem der Ansprüche 1 bis 3, dadurch gekennzeichnet, daß sie weiterhin einen Kunstharzlack bis maximal 3 Gew.% enthält.

6. Masse nach einem der Ansprüche 1 bis 4, dadurch gekennzeichnet, daß sie aus 60 Gew.% Sägemehl, 5 Gew.% Möbelbeize auf Wassergrundlage, 20 Gew.% Polyvinylacetatleim, 12 Gew.% kaltwasserlöslichen Celluloseklebstoff und 3 Gew.% Nitrocelluloselack enthält.

## Claims

1. Mass for coating objects so as to give them a bark-like surface, the mass containing sawdust and a bonding agent, characterised in that the proportion of sawdust is 60 to 85 % by weight, a cold-setting adhesive on a polyvinylacetate base is used as the bonding agent and has a proportion of approximately 10 to 30 % by weight and a cold water soluble cellulose adhesive with a proportion of approximately 5 to 20 % by weight is in addition added to the mass as an ingredient.

2. Mass according to Claim 1, characterised in that furthermore a dye with a proportion of approximately 3 to 8 % by weight is added to said mass.

3. Mass according to Claim 2, characterised in that the dye is water-soluble furniture stain.

4. Mass according to one of Claims 1 to 3, characterised in that it furthermore contains a nitrocellulose varnish up to max. 3 % by weight.

5. Mass according to one of Claims 1 to 3, characterised in that it furthermore contains a synthetic resin varnish of up to max. 3 % by weight.

6. Mass according to one of Claims 1 to 4, characterised in that it contains 60 % by weight sawdust, 5 % by weight furniture stain on a water base, 20 % by weight polyvinylacetate adhesive, 12 % by weight coldwater soluble cellulose adhesive and 3 % by weight nitrocellulose varnish.

**Revendications**

1. Composition pour revêtir des objets, afin de leur donner un aspect de surface qui imite celui de l'écorce d'un arbre, ladite composition comportant de la sciure de bois associée à ce liant étant caractérisée en ce que la proportion pondérale de sciure de bois est comprise entre 60 % et 85 %, et en ce que le liant est une colle à froid, à base d'acétate de polyvinyle, qu'on utilise dans une proportion pondérale comprise entre 10 à 30 % environ, ladite composition comportant en outre une charge, constituée par une colle cellulosique soluble dans l'eau froide, qu'on ajoute dans une proportion pondérale de 5 à 20 % environ.

2. Composition selon la revendication 1, caractérisée en ce qu'elle comporte en outre un colorant, ajouté dans une proportion de 3 à 8 % environ.

3. Composition selon la revendication 2, caractérisée en ce que le colorant est constitué par un décapant d'ébéniste soluble dans l'eau.

4. Composition selon l'une quelconque des revendications 1 à 3, caractérisée en ce qu'elle contient en outre une laque à base de nitrocellulose, dans une proportion pondérale allant au maximum jusqu'à 3 %.

5. Composition selon l'une quelconque des revendications 1 à 3, caractérisée en ce qu'elle contient en outre une laque à base de résine synthétique, dans une proportion pondérale allant au maximum jusqu'à 3 %.

6. Composition selon l'une quelconque des revendications 1 à 4, caractérisée en ce qu'elle contient en proportions pondérales : 60 % de sciure de bois, 5 % de décapant d'ébéniste dilué dans l'eau, 20 % de colle à base d'acétate de polyvinyle, 12 % de colle cellulosique soluble dans l'eau, et 3 % de laque à base de nitrocellulose.